Europäisches Patentamt

(19) European Patent Office

Office européen des brevets

(11) Publication number: **0 085 306**
**A2**

# (12) EUROPEAN PATENT APPLICATION

(21) Application number: **83100166.4**

(22) Date of filing: **11.01.83**

(51) Int. Cl.³: **E 02 D 29/14**
**E 03 F 5/06**

(30) Priority: **29.01.82 GB 8202529**

(43) Date of publication of application:
**10.08.83 Bulletin 83/32**

(84) Designated Contracting States:
**AT BE CH DE FR IT LI LU NL SE**

(71) Applicant: **BRICKHOUSE DUDLEY MANUFACTURING LIMITED**
**Dudley Road West**
**Tipton West Midlands DY4 7XL(GB)**

(72) Inventor: **Sains, Dennis William**
**158 Chester Road North**
**Kidderminster Worcestershire(GB)**

(74) Representative: **Lewis, Samuel Hewitt et al,**
**FORRESTER & BOEHMERT Widenmayerstrasse 4/1**
**D-8000 München 22(DE)**

(54) Improvements in or relating to cover and frame assemblies.

(57) In a cover and frame assembly of the kind comprising a frame (25, 65) adapted to be embedded in the ground and affording an access opening (40), and a cover (10, 60) adapted to be received in the frame (25, 65), the cover (10, 60) or the frame (25, 65) has a resiliently biased locking member (56, C) and the frame (25, 65) or cover 10, 60) respectively, a trip element (50, 70), the trip element being positioned on the frame (25, 65) or cover (10, 60) and being of such configuration that as the cover (10, 60) is moved to a closed position in the frame (25, 65), the locking member (56, C) is engaged by the trip element (50, 70) and is first displaced against the resilient force thereof from an unstressed position and then, when the cover (10, 60) is closed, permitted to return towards said unstressed position by the resilience thereof to engage a holding member (55, 75) to lock the cover (10, 60) in said closed position.

FIG. 1

Title: "Improvements in or relating to cover and frame assemblies.

This invention relates to a cover and frame assembly of the kind, hereinafter referred to as of the kind specified, comprising a frame adapted to be embedded in the ground over a manhole, sump, sewer, gulley or the like, the frame affording an access opening, and a cover adapted to be received in the frame. The cover may completely close the opening or only partially close the opening, or the cover may have one or more apertures in a side or top thereof to permit drainage of water through the opening or further alternatively, the frame may have one or more apertures in a side or top thereof to permit drainage.

Assemblies of the kind specified are known wherein the cover is hinged to the frame by means of a hinge pin or pins which are either of the type which captively retain the cover in the frame or captively retain the cover in the frame when the cover is closed but permits the cover to be removed from the frame when hinged open. In either type, the ends of the or each hinge pin extend into corresponding recesses provided in the frame, the cover being locked closed in the frame to prevent the cover being opened by unauthorised persons.

Known locking devices comprise a turnbuckle which requires the use of a special tool to lock and unlock the cover, which is obviously inconvenient. Further, turnbuckles are easily damaged if the cover is dropped on the turnbuckle.

A further disadvantage is that the locking device can be made inoperable by environmental conditions. Another type of locking device comprises bolts and nuts but these are easily lost and time consuming to use.

In cover and frame assemblies of the kind specified where the cover comprises a grating having a plurality of grating bars separated by slots which provide said drainage apertures, the grating can prove hazardous to cyclists travelling in a direction parallel to the slots, particularly where the width of the slots is greater than the width of the wheels of the bicycle when a wheel could slip between the grating bars and dismount the cyclist.

It is an object of the present invention to provide a new or improved cover and frame assembly of the kind specified which overcomes or reduces the above mentioned problems.

According to a first aspect of the present invention we provide a cover and frame assembly of the kind specified, the cover or the frame having a resiliently biased locking member, and the frame or cover respectively having a trip element, the trip element being positioned on the frame or cover and being of such configuration that as the cover is moved to a closed position in the frame, the locking member is engaged by the trip element and is first displaced against the resilient force thereof from an unstressed position and then, when the cover is closed, permitted to return towards said unstressed position by the resilience thereof to engage a holding member to lock the cover in said closed position.

In one example, the trip element comprises a cam surface which displaces the locking member and the holding member comprises a formation, for example beneath the cam surface where the trip member is provided on the frame, into which holding member the locking member moves when the cover is closed.

The cover may comprise a grating and the locking member may comprise a part of a grating, such as a grating bar of the grating, the bar being sufficiently resilient to permit the bar to be displaced by the trip element but sufficiently rigid to provide an adequate loading capacity. The grating bar may have a rebate in the end thereof which engages with the holding formation and provides the locking member.

Alternatively, particularly where the grating is rectangular or square, said part of the grating may comprise a cut-out in a corner thereof, the grating being sufficiently inherently resilient to permit the grating itself to be deformed sufficiently as said part engages the trip element of the frame, to permit the holding member to engage in the cut-out when the grating is in a closed position.

In each case, as the cover is closed, the grating bar or grating itself is displaced from said unstressed position as the locking member part engages the cam surface of the trip element and springs back under said resilience into the holding formation thereby locking the cover closed in the frame.

Further alternatively, the cover may comprise a cover such as a manhole cover, which completely closes the opening of a frame, in which case a separate resiliently biased locking member needs to be provided attached to or integral with the cover or frame , although where the cover comprises a grating, a separate resiliently biased locking member may be provided if required.

In each case, to release the locking member to enable the cover to be unlocked, it is merely necessary to displace the locking member against the resilient force thereof so that the locking member is released by the holding member. However, especially where the locking member comprises part of a grating bar, or a cut-out in a corner thereof, wherein a prising tool may be necessary to displace the bar, the assembly provides sufficient resistance to deter an authorised person from opening the cover.

The cover may be hinged to the frame in which case, instead of providing a hinge pin to hinge the cover to the frame, if desired, first and second lug formations may be provided at opposite ends of the cover adjacent corresponding first and second recesses provided in the frame, the lug formations being spaced apart by a distance greater than the distance between the recesses, at least said first of the lug formations being resiliently mounted, which lug formations are engageable with the corresponding recesses to provide the hinged connection between the cover and the frame, by displacing at least said first lug formation against the resilient force of the mounting, and manoeuvring the cover so that the second lug formation is received in the second recess and the displaced lug formation is adjacent the first recess, and permitting the displaced lug formation to spring back to engage in the first recess under the resilient biasing force.

To remove the cover from the frame it is merely necessary to displace the lug formation from the recess, manually or with a with a prising tool if necessary, against the resilient force and to manoeuvre the cover out of the frame.

Where the cover comprises a grating, the grating may comprise a plurality of grating bars, the bars being connected at their one ends in pairs by bridge bars, and at their other ends in pairs by further bridge bars to provide a grating of substantially zig-zag configuration.

Where lug formations are provided to achieve a hinged connection, the first of the lug formations may be mounted on a free end of an end grating bar, which grating bar may be displaced to provide the resilient biasing force of the lug formation.

To achieve the resilience of the cover, preferably the cover is made of ductile iron although other materials having an inherent, slight resilience could alternatively be utilised such as steel.

The frame may have inwardly projecting formations on which the bridge bars rest when the cover is in a closed condition.

According to a second aspect of the invention we provide a grating for a cover and frame assembly of the kind specified comprising a plurality of grating bars separated by slots, the grating bars each being of cranked formation so that the slots between the grating bars are not rectlinearly continuous between the ends of the grating bars.

Thus such a grating reduces the danger of a wheel such as a bicycle wheel sliding between the grating bars even when the distance between adjacent grating bars is greater than the width of the wheel although the wheel may still enter the slots but entry will be limited.

According to a third aspect of the invention we provide a cover and frame assembly according to the first aspect of the invention wherein the cover comprises a grating according to the second aspect of the invention.

The frame may be rectangular so that the grating bars extend between two opposite sides thereof.

Each grating bar may comprise a pair of parallel longitudinally and laterally spaced end parts connected by a portion relatively inclined to each of the end parts to provide said cranked formation grating bars and preferably, the end parts are each adjacent to and perpendicular relative to the sides of the frame.

Preferably each of the inclined portions are parallel to one another and any remaining large space of the opening of the frame into which no grating bar extends, may be divided by one or more projections of the grating or of the frame to divide and hence reduce said space.

The invention will now be described with the aid of the accompanying drawings in which:-

FIGURE 1 is a plan view of a cover of first embodiment of a cover and frame assembly in accordance with the invention;

FIGURE 2 is a section on the lines 2-2 of Figure 1;

FIGURE 3 is a fragmentary plan view of the frame of a cover and frame assembly in which the cover of Figures 1 and 2 may be received;

FIGURE 4 is a view on arrow IV of Figure 3;

FIGURE 5 is fragmentary perspective view of a corner of a second embodiment of a cover and frame assembly in accordance with the invention; and

FIGURE 6 is a fragmentary perspective view of the inside of the corner of the assembly of Figure 5.

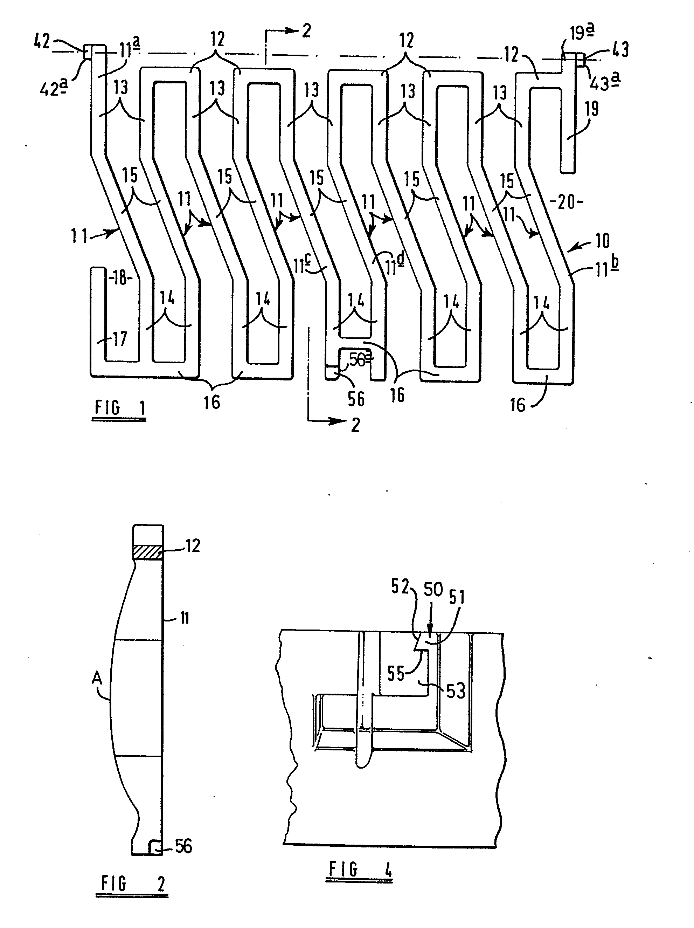

Referring first to Figures 1 and 2, there is shown a cover 10 for a first embodiment of a cover and frame assembly in accordance with the invention comprising a grating having a plurality of, in the example shown, ten, grating bars 11.

Each grating bar 11 comprises two end parts 13, 14 which are parallel to each other and longitudinally and laterally spaced from one another, connected by a centre portion 15 in a cranked configuration.

The end parts 13 are connected in pairs at their one end by first bridge bars 12 which extend perpendicularly to the end parts 13, and the pairs of end parts 14 of the grating bars 13 not connected at their one end by first bridge parts 12, are connected in pairs at their other ends, by second bridge bars 16, which are also perpendicular to the end parts 14. The centre portions 15 of each grating bar 11 extend away from the first bridge bars 12 in a direction which is inclined to the right as seen in Figure 1.

The end part 13 of the leftmost in Figure 1; grating bar 11a is not connected at said one end by any first bridge bar 12 to any further grating bar 11, and the second bridge bar 16 at said other end of the leftmost grating bar 11a is extended to the left as seen in the drawings and has a projection 17 which extends upwardly perpendicularly into a space 18 behind the centre part 15 of the leftmost bar 11a, in the manner of an end part 14 to divide the space 18.

A first bridge bar 12 connected to the rightmost grating bar 11b has a downwardly extending projection 19 which extends into a space 20 in front of the centre part 15 of the bar 11b in the manner of an end part 13 also to divide the space 20.

The leftmost grating bar 11a extends upwardly beyond the remainder of the grating bars 11 and bridge bars 12 and the projection 19 also has an extension 19a which extends upwardly beyond the remainder of the grating bars 11 and bridge bars 12.

The second bridge bar 16 which connects the centre two grating bars 11c and 11d is not at the ends of the end part 14 as are each of the other second bridge bars 16, but is spaced slightly inwardly.

The grating 10 is made of ductile iron but could be made of steel or any other material which exhibits a slight inherent resilience. To minimise bending as traffic passes over the grating 10, so that the grating provides a sufficient load bearing capacity, the grating bars 11 are each of arcuate configuration on their lower surface, as shown in Figure 2 at A.

With conventional gratings, having straight, parallel, grating bars, there is always the risk of a narrow wheel, such as a bicycle wheel which is narrower than the space between adjacent grating bars, and particularly a wheel moving in a direction parallel to the grating bars, that the wheel will slip into a space between two adjacent grating bars, which obviously, is very dangerous.

With the grating design described above, the risk is minimised because of the presence of the inclined centre part 15 which effectively increase the support area for a wheel and reduces the possible depth of entry of a wheel inbetween adjacent grating bars.

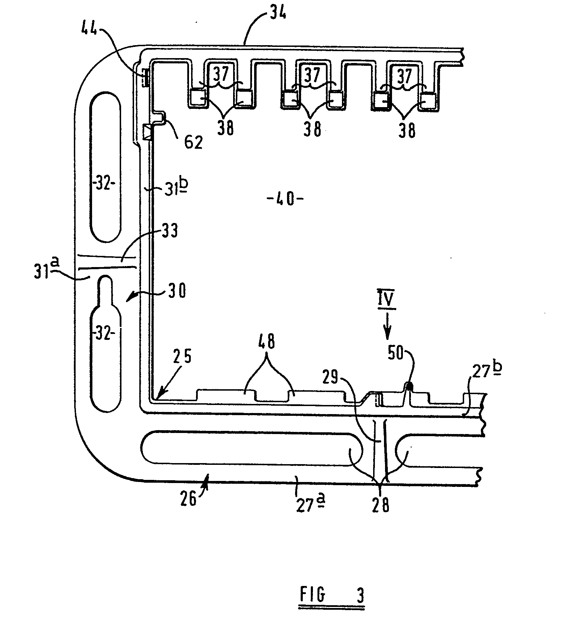

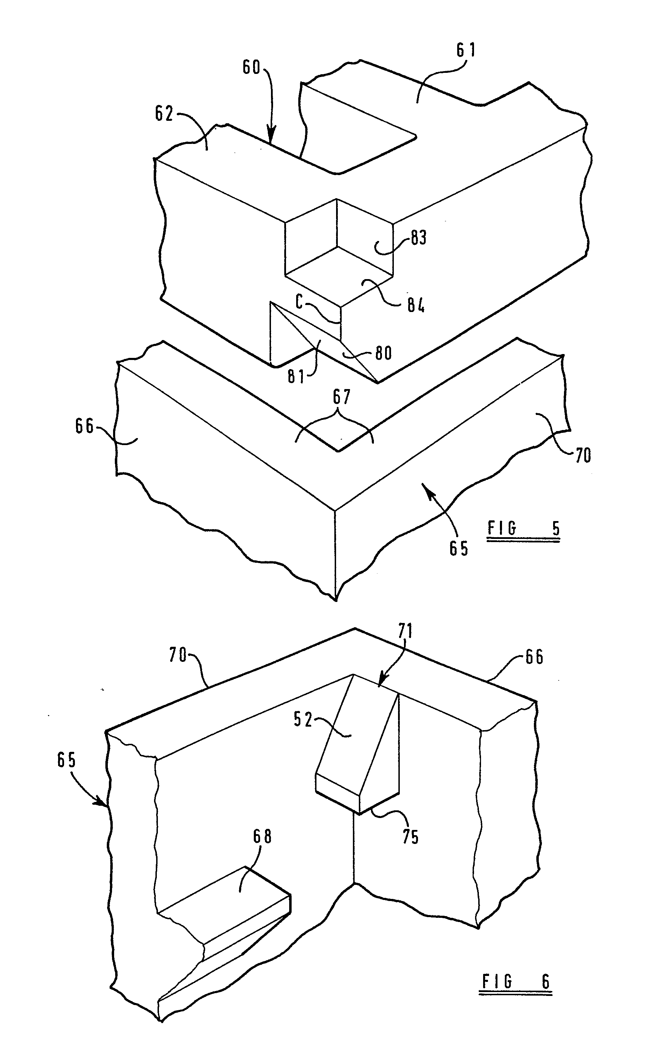

Referring now to Figures 3 and 4, there is shown a frame 25 for a cover and frame assembly in accordance with the invention, for use with the grating 10 of Figures 1 and 2.

The frame 25 has a front side 26 of L-shape in cross-section, having an outwardly extending flange 27a and an upstanding flange 27b, the flange 27a having apertures 28, and strengthening ribs 29 being provided between the two flanges 27a, 27b. The frame 25 also has two opposite sides 30, only one of which can be seen in the drawings, again of L-shape in section, also having an outwardly extending flange 31a, and an upstanding flange 31b, the lower flange 31a having apertures 32, and a strengthening rib 33 being provided between the two flanges 31a, 31b.

The flanges 27a, 31a enable the frame 25 to be embedded in the ground above a manhole, sewer, sump, gulley or the like.

A fourth, rear side 34 of the frame 25 opposite to side 26, has no outwardly extending flange but has a plurality of inwardly extending teeth 37, each tooth 37 having a rebate 38 adjacent the free end.

The frame 25 is conventionally cast or otherwise fabricated and affords an access opening 40 to the manhole, sewer, sump, gulley or the like beneath.

The grating 10 is adapted to be received in a hinged manner in the frame 25 by virtue of two oppositely outwardly extending lugs 42, 43, the lug 42 being mounted on that part of grating bar 11a upwardly of the remainder of the grating bars 11 and bridge bars 12, and lug 43 being mounted on the extension 19a of projection 19 which extends upwardly beyond the grating bars 11 and bridge bars 12.

The sides 30 of the frame 25 each have a corresponding recess 44 adjacent rear side 34, in the upstanding flange 31b thereof, the recesses 44 each being sufficiently large at the lower end thereof to receive the lugs 42, 43, but too small adjacent the top thereof to enable the lugs 42 or 43 to be freely slid into the lower larger part. Further, the distance between the end surfaces 42a, 43a of the lugs 42, 43 of the grating 10 is greater than the distance between the side flanges 31b of the sides 30.

However, due to the resilience of the ductile grating 10, the lug 43 can be received in the recess 44 in the right-hand side 30 (not shown) of frame 25 and the grating bar 11a displaced to the right manually, or if neccessary with a suitable levering tool, to permit the grating 10 to be lowered into the frame 25 with the lug 42 adjacent recess 44 of the left side 30. As the levering force is released, the grating bar 11a will move back to the left to an unstressed position by virtue of the resilience thereof so that the grating 10 will be entrapped in the frame by the lugs 42, 43 in the recesses 44. It will be appreciated that when the grating bar 11a is thus displaced to the right, the displacement is permitted as a result of flexing not only of the grating bar 11a but also of the other grating bars 11 although in an alternative design, only grating bar 11a may be arranged to be displaced. When the grating 10 has returned to the unstressed condition a small clearance exists between the ends of the lugs 42, 43 and their associated recess 44 as well as between the inwardly facing surfaces of the side flanges 31b and the adjacent side surfaces of the cover.

The lugs 42, 43 are cylindrical and the recesses 44 are of corresponding configuration and thus the grating 10 may be hinged relative to the frame 25 between an open condition where an access may be gained to the manhole cover, sewer, gulley, sump or the like through the opening 40 of the frame, to a closed condition wherein the grating 10 is received within and supported by the frame to prevent access through the opening 40.

To release the grating 10 it would be necessary again manually or with a suitable levering tool, to force the grating bar 11a to the right so that the lug 42 can be released from the associated recess 44.

When the grating 10 is hinged closed, the first, upper bridge bars 12 will be received in and rest in the rebates 38 of the teeth 37 of the frame 25, whilst the second lower bridge bars 16 will rest on inwardly extending lugs 48 provided on the inside surface of the flange 27b of the front side 26. A further pair of flanges 62 each adjacent a recess 44 support the end grating bar 11a and projection 19.

The grating 10 may be locked in the frame in a closed condition by virtue of a locking means which comprises an inwardly extending   trip element 50 also provided on the flange 27b of the frame 25 and comprising an overhanging tongue 51 (Figure 4) with a sloping side 52 which provides a cam surface and overlies a recess 53, the lower side of the trip element 50 providing a holding member 55.

The locking means further includes a locking member provided by a rebate 56 at the end of grating bar 11c.

Thus as the grating 10 is closed, vertical side face 56a of the grating bar 11c will engage the sloping side 52 of the trip element 50, and as a downward force is applied to the grating, the grating bar 11c will be displaced to the left as seen in the drawings from the normal unstressed condition against the resilience of the grating 10.

Further, grating bar 11d will also be displaced to the left by virtue of being connected to grating bar 11c by bridge bar 16.

As the lower surfaces of the bridge bars 12 and 16 engage rebates 38 of teeth 37 and the lugs 48 of side 26 respectively, i.e. when the cover is closed, the rebate 56 of grating bar 11c will be below the trip element 50 and will thus spring back into recess 53, due to the resilience of the ductile iron grating 10, towards the unstressed position when the locking member 56 of the grating bar 11c will be below the overhang of the trip element 50 and thus will be held against being raised, by the holding formation 55 of the trip element 50, thus locking the grating 10 closed in the frame 25.

The displacement of the grating bars 11c and 11d is permitted not only by flexing of the bars 11c and 11d themselves but also by virtue of flexing of other grating bars 11 although again, in an alternative design, the grating bars 11c and 11d, or even grating bar 11c only, may be arranged to be displaced as the grating 10 is closed. Depending on the friction between the grating 10 and frame 25 the grating 10 as a whole may not be displaced to the left but generally it will be so displaced to bring the end surface of the lug 43a into engagement with the end surface of its associates recess 44 and/or the outwardly facing side surface of the grating bar 11a into engagement with the inwardly facing side surface of the adjacent side flange 31b.

To unlock the grating, it is necessary to displace the grating bar 11c to the right once again, manually or with a suitable prising tool, until the rebate 56 clears the trip element 50.

Referring to Figures 5 and 6, there is shown a corner of a second embodiment of a cover and frame assembly in accordance with the invention.

A cover 60 again comprises a grating having grating bars 61, similar to grating bars 11 of the grating 10 of Figure 1, joined by bridge bars 62, again in a similar manner to bridge bars 12, 16 of Figure 1.

However, all of the bridge bars 62 are provided at the ends of the grating bars 61 and thus there is no rebate corresponding to rebate 56.

The grating 60 is again made of ductile iron, steel or another material which exhibits some inherent resilience, and is of the same general configuration to the grating 10 of Figures 1 to 4, providing a hinged connection to a frame 65 by lugs provided on the grating 60 which engage in recesses adjacent a rear side of the frame.

The frame 65 has sides 70 (only one of which can be seen) and a front 66 corresponding to sides 30 and front 26, the sides 70 and front 66 both having an upwardly extending flange 67 and the front 26 providing inwardly extending lugs 68, similar to lugs 48 to support the grating 60 in the frame.

There is no inwardly extending trip element such as trip element 50 along the front 66, but a pair of trip elements 71 are located, one in each front corner of the frame 65, to engage with the grating 60 to provide a locking means. Each element 71 has an inclined upper surface 52' providing a cam surface, beneath which a recess provides a holding member 75.

As stated above, the grating 60 has no central rebate centrally of the front side 66 , but in each front corner of the grating 60 two cut-outs are provided which are adapted to engage with the trip element 71 and holding member 75 to provide locking between the grating 60 and the frame 65.

A first cut-out 80 on the grating 60 has an inclined lower surface 81 which, as the grating 60 is hinged closed, engages the inclined upper surface 52 of the element 71 of the grating 60. Because the grating is sufficiently resilient to flex, as the surfaces 81 and 52' engage and a downward force is imposed on the grating, the surfaces 81 and 52' ride over one another until a second cut-out 83 of the grating 60 engages under the element 71 when the grating will spring back into an unstressed condition. A plain upper surface 84 is provided in the second cut-out 83 which is engaged by the holding member 75.

Because both sides of the grating 60 and frame 65 are provided with locking means, both sides of the grating 60 will be held by the locking means in a closed condition.

To release the grating 60 to permit the grating to be hinged to an open position, the grating 60 needs to be deformed sufficiently relative to the frame 65, at least in the region of one of the locking means, against the resilient force of the grating 60, to permit the holding member 75 and plain surface 84 to disengage.

This may be achieved manually where the design of the grating permits, or by inserting a prising tool between the grating and the frame, at least in the region of one of the locking means.

Of course if required, further locking means similar to the locking means provided by the trip element 50 and rebate 56 of the Figures 1 to 4 embodiment could also be provided along the front side.

Various modifications may be made to both of the embodiments described above without departing from the scope of the invention. For example, a cover and frame assembly in accordance with the first aspect of the invention need not comprise a frame of the configurations shown, or gratings comprising grating bars having end parts 13 and 14 connected by an inclined centre part, but may be of any other desired configuration. For example, the frame 25, 65 need not have an outwardly extending flange, such as flange 27a on the sides 30, 70, and fronts 26,66 and the gratings 10, 60 could have straight grating bars 11, 61 although the above described configuration of grating is preferred for the reasons given.

Further, it is not necessary for the gratings 10, 60 to be received in the frame 25, 65 by virtue of a hinge means such as that described utilising the resilience of the grating but other hinge means may be provided such as a hinge pin or pins.

In the embodiment described above, it has been found that the hinge lugs 42, 32 of the grating can only be released from their associated recess 44 when the grating is in an open position. In an alternative embodiment, the grating may be removed from the frame, even in a locked position.

By suitable design of the grating, if required provision may be made to limit the amount of resilient deformations the grating may be subjected to when removed from the frame so that the possibility of a permanent set in the grating is obviated.

In an assembly according to the second aspect of the invention, it is not necessary for a locking means such as that described to be provided, but any other type of locking means may be provided, or no locking means of any description need be provided.

Although the invention has been described with reference to a cover and frame assembly wherein the cover comprises a grating, any other type of

**0085306**

cover which partially or completely closes an opening in a frame above a manhole, access opening, sewer, sump or the like may be provided such as a manhole cover. In this case, the locking member need not comprise a grating bar such as described above with reference to Figures 1 to 4 of the drawings or any other grating part, but a suitable resilient locking member may be attached to or integral with the cover. However, where the cover comprises a grating, if desired a separate resilient locking member may be provided if required.

- 12 -

**0085306**

CLAIMS:

1. A cover and frame assembly comprising a frame (25,65) adapted to be embedded in the ground over a manhole, sump, sewer, gulley or the like, the frame (25,65) affording an access opening (40) and a cover (10,60) adapted to be received in the frame, characterised in that the cover (10,60) or the frame (25,65) has a resiliently biased locking member (56,80), and the frame or cover respectively has a trip element (50,71), the trip element being positioned on the frame (25,65) or cover (10,60) and being of such configuration that as the cover is moved to a closed position in the frame (25,65), the locking member (56,80) is engaged by the trip element (50,71) and is first displaced against the resilient force thereof from an unstressed position and then, when the cover (10,60) is closed, permitted to return towards said unstressed position by the resilience thereof to engage a holding member (55,75) to lock the cover (10,60) in said closed position.

2. An assembly according to Claim 1 characterised in that the trip element (50,71) comprises a cam surface (52,52') which displaces the locking member (56,80) and the holding member comprises a formation beneath the cam surface (52,52') into which the locking member (56,80) moves when the cover (10,60) is closed.

3. An assembly according to Claim 1 or Claim 2 characterised in that the cover (10,60) comprises a grating and the locking member (56,80) comprises a part of the grating (10,60).

4. An assembly according to Claim 3 characterised in that said part (56) is a rebate in the end of a grating bar (56a) of the grating (10), the bar (56a) being sufficiently resilient to permit the bar to be displaced by the trip element (50) but sufficiently rigid to provide an adequate loading capacity, the rebate (56) engaging with the holding member (55).

5. An assembly according to Claim 3 characterised in that said part of the grating comprises a cut-out (83) in a corner thereof, the grating (60) being sufficiently inherently resilient to permit the grating itself to be deformed sufficiently as a cam surface (81) of the corner engages the trip element (71) of the frame (65) to permit the holding member (75) to engage in the cut-out (83) when the grating is in a closed position.

0085306

6.   An assembly according to any one of the preceding claims characterised in that first and second lug formations (42,43) are provided at opposite ends of the cover (10,60) adjacent corresponding first and second recesses (44) provided in the frame, the lug formations (42,43) being spaced apart by a distance greater than the distance between the recesses (44), at least said first (42) of the lug formations being resiliently mounted, which lug formations (42,43) are engageable with the corresponding recesses (44) to provide a hinged connection between the cover (10,60) and the frame (25,65), by displacing at least said first lug formation (42) against the resilient force of the mounting, and manoeuvring the cover (10,60) so that the second lug formation (43) is received in the second recess (44) and the displaced lug formation (42) is adjacent the first recess (44), and permitting the displaced lug formation to spring back to engage in the first recess (44) under the resilient biasing force.

7.   An assembly according to Claim 6 where appendant to Claim 3 characterised in that the grating (10,60) comprises a plurality of grating bars (11), the bars being connected at their one ends in pairs by bridge bars (12), and at their other ends in pairs by further bridge bars (16) to provide a grating of substantially zig-zag configuration, the first of the lug formations (42) being mounted on a free end of an end grating bar (11a), which grating bar (11a) is displaceable to provide the resilient biasing force.

8.   An assembly according to Claim 7 characterised in that the frame (25,65) has inwardly projecting formations (38,48) on which the bridge bars (12,16) rest when the cover (10,60) is in a closed condition.

9.   A grating for a cover and frame assembly of the kind comprising a frame (25,65) adapted to be embedded in the ground over a manhole, sump, sewer, gulley or the like, the frame (25,65) affording an access opening (40) and a cover (10,60) adapted to be received in the frame, characterised in that the grating (10,60) comprises a plurality of grating bars (11) separated by slots, the grating bars (11) each being of cranked formation so that the slots between the grating bars are not rectlinearly continuous between the ends of the grating bars (11).

0085306

10. A cover and frame assembly according to any one of Claims 1 to 8 characterised in that the cover comprises a grating according to Claim 13, the frame (25,65) being rectangular and the grating bars (11) extending between two opposite sides thereof, each grating bar (11) comprising a pair of parallel longitudinally and laterally spaced end parts (13,14) connected by a portion (15) relatively inclined to each of the end parts (13,14) to provide said cranked formation grating bars, each of the inclined portions (15) being parallel to one another.

0085306

1/3

FIG 1

FIG 2

FIG 4

FIG 3

FIG 5

FIG 6